# NEW EUROPEAN PATENT SPECIFICATION

(11) **EP 0 919 699 B2**
(45) Date of publication and mention of the opposition decision: **13.07.2011**
(45) Mention of the grant of the patent: 08.09.2004
(21) Application number: 98309624.9
(22) Date of filing: 24.11.1998
(51) Int. Cl.: F01D 5/28, F01D 11/12

(54) **Columnar zirconium oxide abrasive coating for a gas turbine engine seal system**
Schleifmittelbeschichtung aus stengelförmigem Zirkonoxid für eine Gasturbinendichtung
Revêtement abrasif d'oxide de zirconium à structure en colonne pour un système d'étanchéité de turbine à gaz

(30) Priority: 26.11.1997 US 979065
(43) Date of publication of application: 02.06.1999
(73) Proprietor: United Technologies Corporation, Hartford, CT 06101 (US)
(72) Inventor: Freling, Melvin, West Hartford, Connecticut 06117 (US); Gupta, Dinesh K., South Windsor, Connecticut 06074 (US); Lagueux, Ken, Berlin, Connecticut 06037 (US); Demasi-Marcin, Jeanine T., Marlborough, Connecticut 06447 (US)
(74) Representative: Leckey, David Herbert

(56) References cited:
- EP-A- 0 765 951
- EP-A1- 0 707 091
- EP-A2- 0 366 924

## Description

The present invention relates generally to an abrasive coating that is applied to rotating members in gas turbine engines to enhance airseal cutting, thereby minimizing clearance losses and improving rotating member durability.

Gas turbine engines typically include a variety of rotary seal systems to maintain differential working pressures that are critical to engine performance. One common type of seal system includes a rotating (rotary) member such as a turbine blade positioned in a rub relationship with a static, abradable seal surface. The rub relationship creates a small operating clearance between the turbine blade and seal surface to limit the amount of working gas that bypasses the turbine blade. Too large a clearance can allow undesirable amounts of working gas to escape between the turbine blade and seal surface, reducing engine efficiency. Similar seal systems are typically used as gas turbine engine inner and outer airseals in both the compressor and turbine sections.

To maintain a desirably small operating clearance, the rotating member, for example a turbine blade, typically has an abrasive tip capable of cutting the seal surface with which it is paired. When a gas turbine engine is assembled, there is a small clearance between the rotating member and seal surface. During engine operation, the rotating member grows longer due to centrifugal forces and increased engine temperature and rubs against the seal surface. The rotating member's abrasive tip cuts into the abradable seal surface to form a tight clearance. The intentional contact between the abrasive tip and seal surface, combined with thermal and pressure cycling typical of gas turbine engines, creates a demanding, high wear environment for both the seal surface and abrasive tip.

To limit seal surface erosion and spalling, thereby maintaining a desired clearance between the rotating member and seal surface, seal surfaces are typically made from relatively hard, though abradable, materials. For example, felt metal, plasma sprayed ceramic over a metallic bond coat, plasma sprayed nickel alloy containing boron nitride (BN), or a honeycomb material are commonly seal surface materials.

Unless the rotating member has an appropriate abrasive tip, the seal surface with which is paired can cause significant wear to the rotating member. In addition to degrading engine performance, this is undesirable because rotating members, particularly turbine and compressor blades, can be very expensive to repair or replace. As a result, the materials used to form abrasive tips are typically harder than the seal surfaces with which they are paired. For example, materials such as aluminum oxide (Al₂O₃), including zirconium oxide (Zr₂O₃) toughened aluminum oxide; electroplated cubic BN (cBN); tungsten carbide-cobalt (WC-Co); silicon carbide (SiC); silicon nitride (Si₃N₄), including silicon nitride grits cosprayed with a metal matrix; and plasma-sprayed zirconium oxide stabilized with yttrium oxide (Y₂O₃-ZrO₂) have been used for abrasive tips in some applications. Three of the more common abrasive tips are tip caps, sprayed abrasive tips, and electroplated cBN tips.

A tip cap typically comprises a superalloy "boat" filled with an abrasive grit and metal matrix. The abrasive grit may be silicon carbide, silicon nitride, silicon-aluminumoxynitride (SiAlON) and mixtures of these materials. The metal matrix may be a Ni, Co, or Fe base superalloy that includes a reactive metal such as Y, Hf, Ti, Mo, or Mn. The "boat" is bonded to the tip of a rotating member, such as a turbine blade, using transient liquid phase bonding techniques. Tip caps and the transient liquid phase bonding technique are described in commonly assigned US Patents 3,678,570 to Paulonis et al., 4,038,041 to Duval et al., 4,122,992 to Duval et al., 4,152,488 to Schilke et al., 4,249,913 to Johnson et al., 4,735,656 to Schaefer et al., and 4,802,828 to Rutz et al. Although tip caps have been used in many commercial applications, they can be costly and somewhat cumbersome to install onto blade tips.

A sprayed abrasive tip typically comprises aluminum oxide coated silicon carbide or silicon nitride abrasive grits surrounded by a metal matrix that is etched back to expose the grits. Such tips are described in commonly assigned US Patents 4,610,698 to Eaton et al., 4,152,488 to Schilke et al., 4,249,913 to Johnson et al., 4,680,199 to Vontell et al., 4,468,242 to Pike, 4,741,973 to Condit et al., and 4,744,725 to Matarese et al. Sprayed abrasive tips are often paired with plasma sprayed ceramic or metallic coated seals. Although sprayed abrasive tips have been used successfully in many engines, they can be difficult to produce and new engine hardware can show some variation in abrasive grit distribution from tip to tip. Moreover, the durability of sprayed abrasive tips may not be sufficient for some contemplated future uses.

An electroplated cBN abrasive blade tip typically comprises a plurality of cBN grits surrounded by an electroplated metal matrix. The matrix may be nickel, MCrAlY, where M is Fe, Ni, Co, or a mixture of Ni and Co, or another metal or alloy. Cubic boron nitride tips are excellent cutters because cBN is harder than any other grit material except diamond. Electroplated cBN tips are well suited to compressor applications because of the relatively low temperature (i.e., less than about 815°C (1500°F)) environment. Similar tips, however, may have limited life in turbine applications because the higher temperature in the turbine section can cause the cBN grits and perhaps even the metal matrix to oxidize. Although electroplated cBN tips are typically less expensive to produce than sprayed abrasive tips, the technology used to make them can be difficult and costly to implement.

Therefore, the industry needs an abrasive tip for gas turbine engine seal systems that is highly abrasive, more durable, and less expensive to produce than those presently available.

The present invention is directed to an abrasive tip for gas turbine engine seal systems that is highly abrasive, more durable, and less expensive to produce than those presently available and in broad terms provides a seal system or rotary member for a seal system in which the rotary member comprises an abrasive tip in which the abrasive tip comprises a zirconium oxide abrasive coat having a columnar structure, wherein the zirconium oxide abrasive coat comprises zirconium oxide and about 11 wt% to about 13 wt% of yttrium oxide.

The invention provides a gas turbine engine seal system with a rotary member having an abrasive tip in rub relationship to a stationary, abradable seal surface. The abrasive tip, which is harder than the abradable seal surface so the abrasive tip can cut the abradable seal surface, comprises a zirconium oxide abrasavie coat which may be deposited directly onto a substantially grit-free surface on the rotating member. The zirconium oxide abrasive coat has a columnar structure and comprises zirconium oxide and about 11 wt% to about 13 wt% of yttrium oxide.

In an embodiment of the invention the abrasive tip comprises a metallic bond coat deposited onto a substantially grit-free surface on the rotary member, an aluminum oxide layer disposed on the metallic bond coat, and a zirconium oxide abrasive coat with a columnar structure deposited on the aluminum oxide layer. The zirconium oxide abrasive coat comprises zirconium oxide and about 11 wt% to about 13 wt% of yttrium oxide.

In an embodiment of the invention, a gas turbine engine blade of knife edge is provided with the abrasive tip.

A preferred embodiment of the present invention will now be described, by way of example only, with reference to the accompanying drawings in which:
Fig. 1 is a cut-away perspective view of a gas turbine engine.
Fig. 2 is a sectional view of compressor outer and inner airseals of the present invention.
Fig. 3 is a perspective view of a turbine blade having an abrasive tip of the present invention.
Fig. 4 is an enlarged view of the columnar structure of the abrasive tip of the present invention.

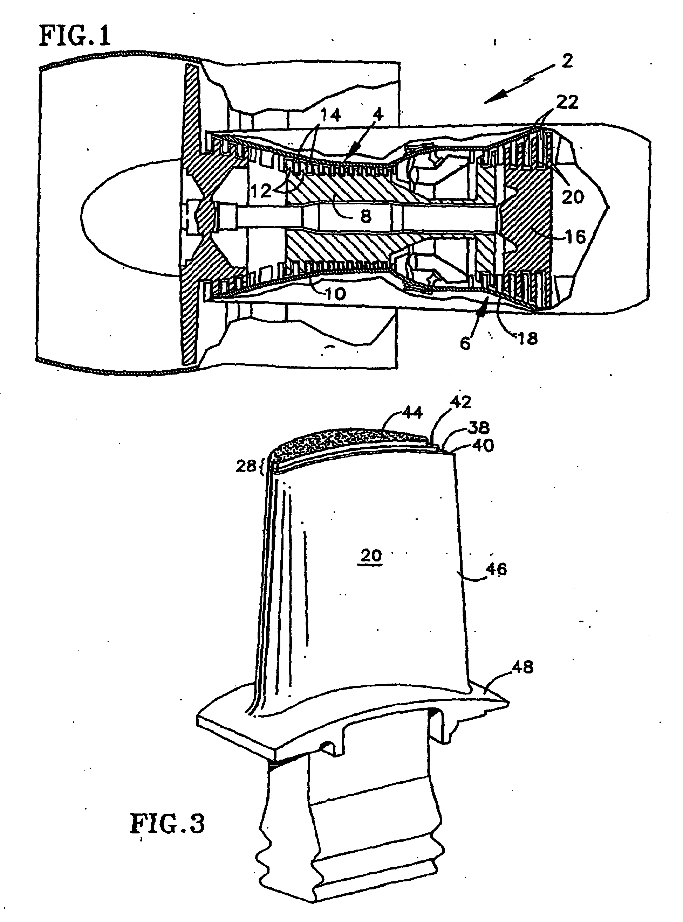

Fig. 1 shows a typical gas turbine engine 2 that includes a compressor section 4 and a turbine section 6. The compressor section 4 includes a compressor rotor 8 disposed inside a compressor case 10. A plurality of compressor blades 12, one of the rotating members in the engine, are mounted on the rotor 8 and a plurality of compressor stators 14 are disposed between the blades 12. Similarly, the turbine section 6 includes a turbine rotor 16 disposed inside a turbine case 18. A plurality of turbine blades 20, another of the rotating members in the engine, are mounted on the rotor 16 and a plurality of turbine vanes 22 are disposed between the blades 20.

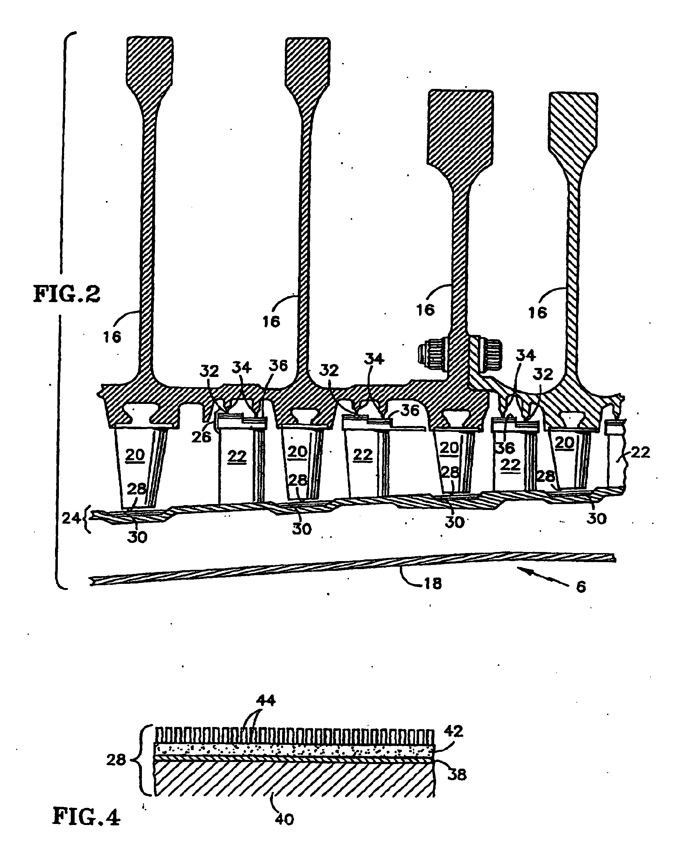

Fig. 2 shows a compressor section 4 outer airseal 24 and inner airseal 26. Each outer airseal 24 includes an abrasive tip 28 disposed on the end of a compressor blade 12 in rub relationship to an abradable outer seal surface 30. For purposes of this application, two components are in rub relationship when the clearance between them allows direct contact between the components at least one time when an engine is run after assembly. Each inner airseal 26 includes an abrasive tip 32 disposed on the end of a compressor knife edge 34 in rub relationship to an abradable inner seal surface 36 disposed on a compressor stator 14. A person skilled in the art will appreciate that similar outer and inner airseals can similar to those described above may be used in the turbine section 6 and other engine sections in addition to the compressor section 4.

Fig. 3 shows a turbine blade 20 embodying the present invention having an abrasive tip 28 that comprises a metallic bond coat 38 deposited on the end 40 of the turbine blade 20, an aluminum oxide (Al₂O₃) layer 42 on the bond coat 38 and a zirconium oxide (ZrO₂) abrasive coat 44 deposited on the aluminum oxide layer 42. An abrasive tip in accordance with the present invention may be deposited directly onto a rotating member as shown or may be deposited over an undercoating on or diffused into the surface of the rotating member. For example, the abrasive tip may be deposited over a diffusion aluminide coating diffused into the surface of the rotating member. The abrasive tip however, should preferably be applied to a surface that is substantially free of abrasive grit to avoid duplicating the abrasive function of the grit and adding additional cost to the component. The abrasive tip 32 on a knife edge 34 could be configured similarly. In either case, the rotating member (i.e., turbine or compressor blade 20, 12, compressor knife edge 34, or turbine knife edge [not shown]) to which the abrasive tip 28, 32 is applied typically comprises a nickel-base or cobalt-base superalloy or a titanium alloy.

Although Fig. 3, shows an abrasive tip 28 which embodies the present invention that includes a metallic bond coat 38, the bond coat is optional and may be deleted if the zirconium oxide abrasive coat 44 adheres well to the rotating member to which it is applied without a bond coat 38. If no bond coat is used, it may be desirable to make the rotating member from an alloy capable of forming an adherent aluminum oxide layer comparable to aluminum oxide layer 42. One such alloy has a nominal composition of 5.0Cr-10Co-1.0Mo-5.9W-3.0Re-8.4Ta-5.65Al-0.25Hf-0.013Y, balance Ni. In most applications, a bond coat 38 is preferred to provide good adhesion between the abrasive tip 28, 32 and rotating member and to provide a good surface for forming the aluminum oxide layer 42 and applying the zirconium oxide abrasive coat 44. Appropriate selection of a bond coat 38 will limit or prevent both spalling of the zirconium oxide abrasive coat 44 from the bond coat 38 or spalling of the entire abrasive tip 28, 32 during engine operation. Spalling of the zirconium oxide abrasive coat 44 or the entire abrasive tip 28, 32 during operation can decrease rotating member durability and impair engine performance by increasing the operating clearance between the rotating member and abradable seal surface.

The metallic bond coat 38 used may be any metallic material known in the art that can form a durable bond between a gas turbine engine rotating member and zirconium oxide abrasive coat 44. Such materials typically comprise sufficient Al to form an adherent layer of aluminum oxide that provides a good bond with the zirconium oxide abrasive coat 44. For example, the metallic bond coat 38 may comprise a diffusion aluminide, including an aluminide that comprises one or more noble metals; an alloy of Ni and Al; or an MCrAlY, wherein the M stands for Fe, Ni, Co, or a mixture of Ni and Co. As used in this application, the term MCrAlY also encompasses compositions that include additional elements or combinations of elements such as Si, Hf, Ta, Re or noble metals as is known in the art. The MCrAlY also may include a layer of diffusion aluminide, particularly an aluminide that comprises one or more noble metals. Preferably, the metallic bond coat 38 will comprise an MCrAlY of the nominal composition Ni-22Co-17Cr-12.5Al-0.25Hf-0.4Si-0.6Y. This composition is further described in commonly assigned US Patents 4,585,481 and Re 32,121, both to Gupta et al., to which further reference may be made, as appropriate.

The metallic bond coat 38 may be deposited by any method known in the art for depositing such materials. For example, the bond coat 38 may be deposited by low pressure plasma spray (LPPS), air plasma spray (APS), electron beam physical vapor deposition (EB-PVD), electroplating, cathodic arc, or any other method. The metallic bond coat 38 should be applied to the rotating member to a thickness sufficient to provide a strong bond between the rotating member and zirconium oxide abrasive coat 44 and to prevent cracks that develop in the zirconium oxide abrasive coat 44 from propagating into the rotating member. For most applications, the metallic bond coat 38 may be about 25 µm (1 mil) to about 250 µm (10 mils) thick. Preferably, the bond coat 38 will be about 25 µm (1 mil) to about 75 µm (3 mils) thick. After depositing the metallic bond coat 38, it may be desirable to peen the bond coat 38 to close porosity or leaders that may have developed during deposition or to perform other mechanical or polishing operations to prepare the bond coat 38 to receive the zirconium oxide abrasive coat 44.

The aluminum oxide layer 42, sometimes referred to as thermally grown oxide, may be formed on the metallic bond coat 38 or rotating member by any method that produces a uniform, adherent layer. As with the metallic bond coat 38, the aluminum oxide layer 42 is optional. Preferably, however, the abrasive tip 28 will include an aluminum oxide layer 42. For example, the layer 42 may be formed by oxidation of Al in either the metallic bond coat 38 or rotating member at an elevated temperature before the application of the zirconium oxide abrasive coat 44. Alternately, the aluminum oxide layer 42 may be deposited by chemical vapor deposition or any other suitable deposition method know in the art. The thickness of the aluminum oxide layer 42, if present at all, may vary based its density and homogeneity. Preferably, the aluminum oxide layer 42 will about 0.1 µm (0.004 mils) to about 10 µm (0.4 mils) thick.

The zirconium oxide abrasive coat 44 comprises a mixture of zirconium oxide and yttrium oxide (Y₂O₃). The zirconium oxide abrasive coat 44 should include enough stabilizer to prevent an undesirable zirconium oxide phase change (i.e. a change from a preferred tetragonal or cubic crystal structure to the less desired monoclinic crystal structure) over the range of operating temperature likely to be experienced in a particular gas turbine engine. The zirconium oxide abrasive coat 44 comprises about 11 wt% to about 13 wt% yttrium oxide.

As Fig. 4 shows, the zirconium oxide abrasive coat 44 should have a plurality of columnar segments homogeneously dispersed throughout the abrasive coat such that a cross-section of the abrasive coat normal to the surface to which the abrasive coat is applied exposes a columnar microstructure typical of physical vapor deposited coatings. The columnar structure should have a length that extends for the full thickness of the zirconium oxide abrasive coating 44. Such coatings are described in commonly assigned US Patents 4,321,310 to Ulion et al., 4,321,311 to Strangman, 4,401,697 to Strangman, 4,405,659 to Strangman, 4,405,660 to Ulion et al., 4,414,249 to Ulion et al., and 5,262,245 to Ulion et al., to which further reference may be made as appropriate. In some applications it may be desirable to apply substantially the same coating as used for the abrasive tip 38 as a thermal barrier coating on an airfoil surface 46 or platform 48 of the blade 20 such that either or both of the airfoil surface 46 or platform 48 are at least partly coated.

The zirconium oxide abrasive coat 44 may be deposited by EB-PVD or any other physical vapor deposition method known to deposit columnar coating structures. Preferably, the abrasive coat 44 will be applied by EB-PVD because of the availability of EB-PVD equipment and skilled technicians. As discussed above, the abrasive coat 44 may be applied over a metallic bond coat 38 or directly to a rotating member, in both cases, preferably in conjunction with an aluminum oxide layer 42. In either case, the abrasive coat 44 should be applied a thickness sufficient to provide a strong bond with the surface to which it is applied. For most applications, the abrasive coat 44 may be about 125 µm (5 mils) to about 1250 µm (50 mils) thick. Preferably, the abrasive coat 44 will be about 125 µm (5 mils) to about 625 µm (25 mils) thick. When applied to turbine or compressor blades, a relatively thick abrasive coat 44 may be desirable to permit assembly grinding of the compressor or turbine rotor in which they are installed. Assembly grinding removes some of the abrasive coat 44 from the blade tips to compensate for slight variations in coating thickness that develop due to tolerances in the deposition process. Starting with a relatively thick abrasive coat 44 allows the assembly grinding procedure to produce a substantially round rotor, while preserving a final abrasive coat 44 that is thick enough to effectively cut a seal surface.

The abradable seal surfaces 30, 36 used in conjunction with the abrasive tips 28, 32 may comprise any materials known in the art that have good compatibility with the gas turbine engine environment and can be cut by the abrasive coat 44. For high pressure turbine applications, the preferred abradable seal material comprises a metallic bond coat (nominally 5.0Cr-10Co-1.0Mo-5.9W-3.0Re-8.4Ta-5.65Al-0.25Hf-0.013Y, balance Ni) and a porous ceramic layer (nominally zirconium oxide stabilized with about 7 wt% yttrium oxide). The bond coat may be applied by either plasma spray or high velocity oxy-fuel deposition. The ceramic layer may be deposited by plasma spraying a mixture of about 88 wt% to about 99 wt% ceramic powder and about 1 wt% to about 12 wt% aromatic polyester resin. The polyester resin is later burned out of the ceramic layer to produce a porous structure. For high pressure compressor applications, the preferred abradable seal material comprises a nickel-based superalloy bond coat and a combination of a nickel-based superalloy (nominally 9Cr-9W-6.8Al-3.25Ta-0.02C, balance Ni and minor elements included to enhance oxidation resistance) and boron nitride as a top coat. The bond coat may be formed by plasma spraying a powder formed by a rapid solidification rate method. The top coat may be formed by plasma spraying a mixture of the bond coat powder and boron nitride powder. Another possible abradable seal material comprises a graded plasma sprayed ceramic material that includes successive layers of a metallic bond coat (nominally Ni-6Al-18.5Cr), a graded metallic/ ceramic layer (nominally Co-23Cr-13Al-0.65Y/aluminum oxide), a graded, dense ceramic layer (nominally aluminum oxide/zirconium oxide stabilized with about 20 wt% yttrium oxide) and a porous ceramic layer (nominally zirconium oxide stabilized with about 7 wt% yttrium oxide). Other possible seal surface materials include felt metal and a honeycomb material. Suitable seal surface materials are described in commonly assigned US Patents 4,481,237 to Bosshart et al., 4,503,130 to Bosshart et al., 4,585,481 to Gupta et al., 4,588,607 to Matarese et al., 4,936,745 to Vine et al., 5,536,022 to Sileo et al., and Re 32,121 to Gupta et al, to which further reference may be made as necessary.

Columnar zirconium oxide abrasive tips present several advantages over cBN tips. For example, they are not prone to oxidation problems. Also, columnar zirconium oxide abrasive tips can simplify manufacturing processes when used with EB-PVD thermal barrier coatings on a blade's airfoil and platform. This can be done at the same time and improve the integrity of both the coating and tip in the tip area compared with similar data for other abrasive tip configurations.

The invention is not limited to the particular embodiments shown and described in this specification. Various changes and modifications may be made without departing from the scope of the claimed invention.

The present invention can be used in high wear gas turbine engine applications that require the maintenance of tight clearances between rotating and static members. For example the present invention is particularly suited for use with abrasive turbine or compressor blade tip or turbine or compressor knife edge. The abrasive blade tip or knife edge is paired with a suitable abradable seal surface to form an outer or inner airseal.

## Claims

1. A gas turbine engine seal system, comprising a rotary member (20;34) having an abrasive tip (28;32) disposed in rub relationship to a stationary, abradable seal surface (30;36), wherein the abrasive tip (28;32) comprises a material harder than the abradable seal surface (30;36) such that the abrasive tip can cut the abradable seal surface (30;36), **characterized in that**:
the abrasive tip (28;32) comprises a zirconium oxide abrasive coat (44) having a columnar structure, wherein the zirconium oxide abrasive coat comprises zirconium oxide and about 11 wt% to about 13 wt% of yttrium oxide.

2. The seal system of claim 1 wherein said abrasive tip (28;32) is deposited onto a substantially grit-free surface on the rotary member.

3. The seal system of claim 1 or 2, wherein the abrasive tip (28) further comprises an aluminium oxide layer (42) disposed between the zirconium oxide abrasive coat (44) and the rotary member (20;34).

4. The seal system of claim 1 or 2, wherein a metallic bond coat (38) is disposed between the zirconium oxide abrasive coat (44) and the rotary member (20;34).

5. The scal system of claim 3, wherein a metallic bond coat (38) is deposited onto the rotary member (20; 34) and said aluminium oxide layer (42) is disposed on the metallic bond coat (38).

6. The seal system of claim 4 or 5, wherein the metallic bond coat (38) comprises a diffusion aluminide, an alloy ofNi and A1, or MCrAlY, wherein M strands for Ni, Co, Fe, or a mixture of Ni and Co.

7. The seal system of any preceding claim, wherein the rotary member is a blade (12;20).

8. The seal system of claim 7, wherein the rotary member is a turbine blade (20).

9. The seal system of claim 8, wherein the turbine blade (20) has an airfoil portion and a platform portion and the airfoil portion or the platform portion or both are at least partly coated with a columnar thermal barrier coating having substantially the same composition as the abrasive tip (28).

10. The seal system of any of claims 1 to 6 wherein the rotary member is a knife edge.

11. The seal system of claim 10, wherein the notary member is a turbine rotor knife edge disposed on a turbine rotor for co-operation with an abradable seal surface disposed on a turbine vane to form an inner air seal.

12. The seal system of claim 7, wherein the rotary member is a compressor blade (12).

13. The seal system of claim 10, wherein the rotating member is a compressor rotor knife edge disposed on a compressor rotor for co-operation with an abradable seal surface disposed on a compressor stator to form an inner air seal.

## Patentansprüche

1. Gasturbinenmaschinen-Dichtungssystem, aufweisend ein Drehelement (20; 34) mit einer Abreibespitze, welche in reibendem Verhältnis zu einer feststehenden abreibbaren Dichtungsfläche (30; 36) angeordnet ist, wobei die Abreibespitze (28; 32) ein härteres Material als die abreibbare Dichtungsfläche (30; 36) aufweist, so dass die Abreibespitze die abreibbare Dichtungsfläche (30; 36) schneiden kann, **dadurch gekennzeichnet, dass**
die Abreibespitze (28; 32) eine Zirconoxid-Abreibeschicht (44) mit einer säulenartigen Struktur aufweist, wobei die Zirconoxid-Abreibeschicht Zirconoxid und etwa 11 Gew.-% bis etwa 13 Gew.-% Yttriumoxid aufweist.

2. Dichtungssystem nach Anspruch 1, wobei die Abreibespitze (28; 32) auf eine im wesentlichen Abrieb-freie Oberfläche des Drehelements aufgebracht ist.

3. Dichtungssystem nach Anspruch 1 oder 2, wobei die Abreibespitze (28) außerdem eine Aluminiumoxidschicht (42) aufweist, welche zwischen der Zirconoxid-Abreibeschicht (44) und dem Drehelement (20; 34) angeordnet ist.

4. Dichtungssystem nach Anspruch 1 oder 2, wobei eine metallische Bindungsschicht (38) zwischen der Zirconoxid-Abreibeschicht (44) und dem Drehelement (20; 34) angeordnet ist.

5. Dichtungssystem nach Anspruch 3, wobei eine metallische Bindungsschicht (38) auf das Drehelement (20; 34) aufgebracht ist und die Aluminiumoxidschicht (42) auf der metallischen Bindungsschicht (38) angeordnet ist.

6. Dichtungssystem nach Anspruch 4 oder 5, bei welchem die metallische Bindungsschicht (38) ein Diffusionsaluminid, eine Legierung aus Ni und Al oder MCrAlY aufweist, wobei M für Ni, Co, Fe oder eine Mischung aus Ni und Co steht.

7. Dichtungssystem nach einem der vorangehenden Ansprüche, wobei das Drehelement eine Schaufel (12; 20) ist.

8. Dichtungssystem nach Anspruch 7, wobei das Drehelement eine Turbinenschaufel (20) ist.

9. Dichtungssystem nach Anspruch 8, wobei die Turbinenschaufel (20) einen Strömungsprofilbereich und einen Plattformbereich hat und der Strömungsprofilbereich oder der Plattformbereich oder beide mindestens teilweise mit einer säulenartigen Wärmebarrierenbeschichtung mit im wesentlichen der gleichen Zusammensetzung wie die Abreibespitze (28) beschichtet sind.

10. Dichtungssystem nach einem der Ansprüche 1 bis 6, wobei das Drehelement eine Messerschneide ist.

11. Dichtungssystem nach Anspruch 10, wobei das Drehelement eine Turbinenrotor-Messerschneide ist, welche auf einem Turbinenrotor zum Zusammenwirken mit einer abreibbaren Dichtungsfläche angeordnet ist, welche auf einer Turbinenleitschaufel angeordnet ist, um eine innere Luftdichtung zu bilden.

12. Dichtungssystem nach Anspruch 7, wobei das Drehelement eine Verdichterschaufel (12) ist.

13. Dichtungssystem nach Anspruch 10, wobei das Drehelement eine Verdichterrotor-Messerschneide ist, welche auf einem Verdichterrotor zum Zusammenwirken mit einer abreibbaren Dichtungsfläche angeordnet ist, die auf einem Verdichterstator angeordnet ist, um eine innere Luftdichtung zu bilden.

## Revendications

1. Dispositif d'étanchéité pour moteur à turbine à gaz, comprenant un élément rotatif (20; 34) qui présente une pointe abrasive (28; 32) placée en relation de frottement avec une surface (30; 36) fixe d'étanchéité qui peut subir une abrasion, dans lequel la pointe abrasive (28; 32) est constituée d'un matériau plus dur que la surface (30; 36) d'étanchéité qui peut subir une abrasion de manière à ce que la pointe abrasive puisse couper la surface (30; 36) d'étanchéité qui peut subir une abrasion,
**caractérisé en ce que**
la pointe abrasive (28; 32) contient un revêtement abrasif (44) en oxyde de zirconium qui présente une structure en colonnes et
**en ce que** le revêtement abrasif en oxyde de zirconium contient de l'oxyde de zirconium et d'environ 11 % en poids à environ 13 % en poids d'oxyde d'yttrium.

2. Dispositif d'étanchéité selon la revendication 1, dans lequel ladite pointe abrasive (28; 32) est déposée sur une surface essentiellement sans poussière de l'élément rotatif.

3. Dispositif d'étanchéité selon la revendication 1 ou 2, dans lequel la pointe abrasive (28) contient de plus une couche (42) en oxyde d'aluminium placée entre le revêtement abrasif (44) en oxyde de zirconium et l'élément rotatif (20; 34).

4. Dispositif d'étanchéité selon la revendication 1 ou 2, dans lequel un revêtement métallique de liaison (38) est placé entre le revêtement abrasif (44) en oxyde de zirconium et l'élément rotatif (20; 34).

5. Dispositif d'étanchéité selon la revendication 3, dans lequel un revêtement métallique de liaison (38) est placé sur l'élément rotatif (20; 34) et ladite couche (42) en oxyde d'aluminium est placée sur le revêtement métallique de liaison (38).

6. Dispositif d'étanchéité selon la revendication 4 ou 5, dans lequel le revêtement métallique de liaison (38) contient un aluminure de diffusion, un alliage de Ni et d'Al ou de MCrAlY dans lequel M correspond à Ni, Co, Fe ou à un mélange de Ni et de Co.

7. Dispositif d'étanchéité selon l'une quelconque des revendications précédentes, dans lequel l'élément rotatif est une pale (12; 20).

8. Dispositif d'étanchéité selon la revendication 7, dans lequel l'élément rotatif est une pale (20) de turbine.

9. Dispositif d'étanchéité selon la revendication 8, dans lequel la pale (20) de turbine présente une partie d'aube et une partie de plateforme, la partie d'aube ou la partie de plateforme étant toutes deux recouvertes au moins partiellement par un revêtement en colonnes de barrière thermique qui présente essentiellement la même composition que la pointe abrasive (28).

10. Dispositif d'étanchéité selon l'une quelconque des revendications 1 à 6, dans lequel l'élément rotatif est un bord de lame.

11. Dispositif d'étanchéité selon la revendication 10, dans lequel l'élément rotatif est un bord de lame de rotor de turbine placé sur un rotor de turbine de manière à coopérer avec une surface d'étanchéité qui peut subir une abrasion placée sur une ailette de turbine pour former une étanchéité interne à l'air.

12. Dispositif d'étanchéité selon la revendication 7, dans lequel l'élément rotatif est une pale (12) de compresseur.

13. Dispositif d'étanchéité selon la revendication 10, dans lequel l'élément rotatif est un bord de lame de rotor de compresseur placé sur un rotor de compresseur de manière à coopérer avec une surface d'étanchéité qui peut subir une abrasion placée sur un stator de compresseur pour former une étanchéité interne à l'air.
